# EUROPÄISCHE PATENTSCHRIFT

(11) **EP 3 745 229 B1**
(45) Veröffentlichungstag und Bekanntmachung des Hinweises auf die Patenterteilung: **30.11.2022**
(21) Anmeldenummer: 20173446.4
(22) Anmeldetag: 07.05.2020
(51) Int. Cl.: G05B 23/02

(54) **VERFAHREN UND VORRICHTUNG ZUR AUSFALLVORHERSAGE VON ELEMENTARRELAIS**
METHODS AND DEVICE FOR PREDICTING AN ELEMENTARY RELAY FAILURE
PROCÉDÉS ET DISPOSITIF DE PRÉVISION DU DÉFAUT D' UN RELAIS ÉLÉMENTAIRE

(30) Priorität: 28.05.2019 DE 102019114211
(43) Veröffentlichungstag der Anmeldung: 02.12.2020
(73) Patentinhaber: Phoenix Contact GmbH & Co. KG, 32825 Blomberg (DE)
(72) Erfinder: HEINRICH, Sebastian, 12489 Berlin (DE)
(74) Vertreter: Patentship Patentanwaltsgesellschaft mbH

(56) Entgegenhaltungen:
- EP-A1- 3 466 792
- WO-A1-2018/162198

## Beschreibung

Die Erfindung betrifft Techniken zur Ausfallvorhersage von Elementarrelais, insbesondere ein Verfahren und eine entsprechende Vorrichtung.

Die Zuverlässigkeit von Elementarrelais wird über Labortests nach DIN EN 61810-2-1 abgeschätzt. Kennzahl ist die Schaltspielzahl, bei welcher 10% der getesteten Relais ausgefallen sind ("B10-Wert"). Diese Tests werden für typischerweise je drei Normlasten AC und DC durchgeführt. Da nicht bekannt ist, bei welcher Last ein Betreiber das Relais einsetzt, wird der kleinste bestimmte "B10-Wert" angenommen. Auf Anfrage erhalten Kunden oft auch direkt die bestimmten "B10-Werte". Mithilfe dieses "B10-Wertes" ist keine Ausfallvorhersage für ein bestimmtes Relais und einen konkreten Anwendungsfall möglich. Der Betreiber des Relais kann sich an der Schaltspielzahl orientieren und alle Relais vorzeitig austauschen. Damit werden unnötig viele Schaltspiele verschenkt und es kommt weiterhin zu Frühausfällen.

Die Druckschrift WO 2018/162198 A1 betrifft ein Verfahren (1) zum Bestimmen einer erwarteten Lebensdauer eines elektrischen Betriebsmittels, wie eines Relais, bezogen auf einen Referenzzeitpunkt.

Die Druckschrift EP 3 466 792 A1 betrifft ein Verfahren zum akustischen Analysieren eines Stellwerkraums, in welchem zumindest ein elektromechanisches Bauelement, wie ein Relais, angeordnet ist.

Die Erfindung hat es zur Aufgabe, den Ausfall eines Elementarrelais besser vorherzusagen. Insbesondere ist es die Aufgabe der Erfindung, eine Technik zu schaffen, mit der eine Ausfallvorhersage von Elementarrelais gemacht werden kann, so dass der Betreiber notwendige Maßnahmen einleiten kann, z.B. einen Austausch des/der betroffenen Relais.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die Erfindung basiert auf der Idee, dass sich ein Relaisversagen durch eine Veränderung messbarer Relais- und Lastgrößen ankündigt. Durch eine Messung dieser Signale und deren Auswertung kann ein bevorstehender Ausfall rechtzeitig erkannt und das Relais vorher ausgetauscht werden.

Ein Relais bzw. Elementarrelais, wie in dieser Anmeldung beschrieben, ist ein durch elektrischen Strom betriebener, elektromagnetisch wirkender, fernbetätigter Schalter mit in der Regel zwei Schaltstellungen. Das Relais wird über einen Steuerstromkreis aktiviert und kann weitere Stromkreise schalten.

Die im Folgenden beschriebenen Verfahren und Vorrichtungen basieren auf dem Ansatz des maschinellen Lernens bzw. einem maschinellen Lernmodell. Ein solches "Machine-Learning-Modell" ist letztendlich nichts anderes als eine (meist umfangreiche) mathematische Funktion. Alle relevanten Daten für die Vorhersage, sogenannte Features bzw. Merkmale, werden als Parameter hineingegeben, und als Ausgabe erhält man einen vorhergesagten Wert. Es kann sich beispielsweise um ein Modell für die Vorhersage der Restlebensdauer einer Maschine handeln, abhängig von verfügbaren Sensordaten oder um die Ausfallwahrscheinlichkeit einer elektronischen Komponente wie einem Relais abhängig von messbaren Größen, wie in dieser Offenbarung beschrieben.

Während des Trainingsprozesses werden automatisch Gewichtungen innerhalb des Modells verändert, sodass es zunehmend in der Lage ist, die gewünschte Beziehung zwischen Features und Vorhersage herzustellen. Was allerdings während des Trainingsprozesses unverändert bleibt, ist die grundlegende Architektur des Modells: die Struktur der Modellfunktion. Diese wird üblicherweise durch eine Person mit entsprechender Kompetenz gewählt, wobei jede Modellarchitektur wiederum einen eigenen Satz Stellschrauben mit sich bringt. Zum Beispiel können Neuronale Netze basierend auf der Anzahl und Anordnung der Units und "Hidden Layers" eingestellt werden; Lineare Regression können basierend auf dem Polynomgrad der gewählten Funktion eingestellt werden. Diese Stellschrauben, die über den Trainingsprozess hinweg gleich bleiben, werden Hyperparameter genannt. Die Menge aller Kombinationsmöglichkeiten der Hyperparameter wird auch als Parameterraum bezeichnet. Da die Hyperparameter großen Einfluss auf die Genauigkeit des Modells haben, ist ihre Optimierung ein wichtiger Schritt in der Modellentwicklung und kann erheblich dazu beitragen, die Vorhersagegenauigkeit zu verbessern.

Gemäß einem ersten Aspekt wird die oben dargestellte Aufgabe gelöst durch ein Verfahren zur Ausfallvorhersage eines Elementarrelais, wobei das Verfahren die in Anspruch 1 definierten Schritte umfasst.

Damit wird der technische Vorteil erreicht, dass der Ausfall des Elementarrelais besser vorhergesagt werden kann. Über die Gewichtung der erfassten Relais- und Lastgrößen gemäß einem Maschinellen Lernalgorithmus lässt sich das Elementarrelais in geeigneter Weise überwachen und so ein Funktionszustand des Relais zum jeweiligen Schaltspiel bestimmen. Aus den so gewonnenen Kennwerten lassen sich geeignete Aussagen zur Ausfallwahrscheinlichkeit ermitteln. Mit fortschreitender Alterung verändern sich die Kennwerte des Elementarrelais. Die Veränderung gibt Aufschluss über einen möglichen bzw. bevorstehenden Ausfall des Relais.

Das Verfahren stellt damit dem Relaisbetreiber eine geeignete Technik zur Verfügung, mit der er Ausfälle von Elementarrelais rechtzeitig erkennen kann, um rechtzeitig notwendige Maßnahmen einleiten kann, z.B. einen Austausch des/der betroffenen Relais.

Als Schaltspiel oder Schaltzyklus wird der vollständige Wechsel eines Schaltzustandes bei einem elektrischen Schalter zurück zur Ausgangsstellung bezeichnet: von der Stellung *Aus* auf *Ein* zurück auf *Aus* bzw. von *Ein* auf *Aus* zurück auf *Ein.* Die maximale Anzahl von Schaltzyklen bzw. Schaltspielen ist hierbei eine vom Hersteller statistisch ermittelte Größe. Angegeben wird hiermit die Anzahl von durchführbaren Schaltvorgängen unter Nennlast, bis der Verschleiß der Schaltkontakte soweit fortgeschritten ist, dass ein zuverlässiges Verbinden oder Trennen nicht mehr gewährleistet werden kann.

Erfindungsgemäß umfasst das Verfahren den folgenden Schritt: Bestimmen der Ausfallwahrscheinlichkeit des Elementarrelais basierend auf einer Veränderung der Kennwerte bezüglich der Anzahl von Schaltspielen.

Damit wird der technische Vorteil erreicht, dass die Ausfallwahrscheinlichkeit effizient bestimmt werden kann. Die Kennwerte verändern sich mit dem Alter des Relais, d.h. der Anzahl Schaltvorgänge, welche das Relais bereits ausgeführt hat. Mit einer Überwachung der zeitlichen Veränderung der Relais-Kennwerte lassen sich geeignete Aussagen zum Alter des Relais machen und damit zur Ausfallwahrscheinlichkeit.

In einer vorteilhaften Ausführungsform des Verfahrens basiert der Maschinelle Lernalgorithmus auf einer Datenbasis, welche Relais- und Lastgrößen von Elementarrelais für verschiedene Schaltspiele umfasst, wobei die Relais- und Lastgrößen der Elementarrelais auf Aufzeichnungen mit verschiedenen Lasten und Relaistypen basieren.

Damit wird der technische Vorteil erreicht, dass ein gesamter Zustandsraum von messbaren Größen des Elementarrelais über verschiedene Anzahlen von Schaltspielen erfasst und in der Datenbasis gespeichert werden kann und somit eine große Datenmenge für den maschinellen Lernalgorithmus liefert. Der maschinelle Lernalgorithmus kann damit eine sehr genaue Bestimmung für den Ausfall des Relais relevanter Kenngrößen vornehmen, so dass das Verfahren eine sehr genaue Ausfallwahrscheinlichkeit bestimmen kann.

In einer vorteilhaften Ausführungsform des Verfahrens umfasst die Datenbasis ferner Informationen über Ausfallschaltspielzahl, Ausfallart und/oder Ausfallursache der Elementarrelais bei den verschiedenen Lasten und Relaistypen.

Damit wird der technische Vorteil erreicht, dass die Kenngrößen in geeigneter Weise mit den Ausfallursachen, der Ausfallart und -schaltspielzahl in Verbindung gebracht werden können. Die Kenngrößen bieten damit ein umfangreiches Bild über einen möglichen Ausfall des Elementarrelais.

In einer vorteilhaften Ausführungsform umfasst das Verfahren die folgenden Schritte: Identifizieren der Kennwerte basierend auf den Informationen über Ausfallschaltspielzahl, Ausfallart und/oder Ausfallursache der Elementarrelais; und Bestimmen von ersten Übertragungsfunktionen, welche aus den messbaren Relais- und Lastgrößen die Kennwerte erzeugen.

Damit wird der technische Vorteil erreicht, dass die Kennwerte einfach bestimmt werden können und mittels der ersten Übertragungsfunktionen sich effizient auf andere messbare Relais- und Lastgrößen verallgemeinern lassen.

In einer vorteilhaften Ausführungsform des Verfahrens stehen die Kennwerte mit der Ausfallursache und/oder Ausfallart der Elementarrelais in Verbindung und/oder verändern sich vor einem Ausfall und umfassen insbesondere Kontaktrauschen der Elementarrelais, Wellen im Spulenstrom der Elementarrelais und/oder Schaltzeiten der Elementarrelais.

Damit wird der technische Vorteil erreicht, dass die Kennwerte einen direkten Aufschluss über einen Ausfall bzw. eine Ausfallwahrscheinlichkeit geben.

Insbesondere Messgrößen wie das Kontaktrauschen der Elementarrelais, Wellen im Spulenstrom der Elementarrelais und Schaltzeiten der Elementarrelais erlauben es, einen Ausfall des Elementarrelais effizient vorherzusagen. Die Kontaktspannung am Lastkontakt stellt einen guten Indikator für die Alterung des Lastkontaktes dar. Bei einem neuen Lastkontakt ist beim Einschalten des Relais mit einem schnellen Übergang von hoher Leerlaufspannung am Lastkontakt zu einer Kurzschlussspannung von 0V zu rechnen, da die Schaltflächen neu und eben sind. Mit fortschreitender Alterung beginnt der Kontakt mehr und mehr zu korrodieren oder brüchig zu werden, so dass sich die Stromleitfähigkeit am Kontaktübergang immer weiter verschlechtert. D.h., beim Einschalten ist mit einem unstetigen Übergang von Leerlaufspannung zu Kurzschlussspannung zu rechnen. Damit können genaue Aussagen über die Alterung des Kontakts bzw. des Relais gemacht werden und es kann in Abhängigkeit der Alterung eine Vorhersage zur Ausfallwahrscheinlichkeit getroffen werden. Je älter der Kontakt bzw. das Relais, desto wahrscheinlicher ist ein bevorstehender Ausfall. Das Kontaktspannungsrauschen gibt ein Merkmal im Spannungsübergang am Lastkontakt an, mit dem auf die Korrosion bzw. Brüchigkeit des Lastkontakts und damit auf die Alterung des Relais und dessen Ausfallwahrscheinlichkeit geschlossen werden kann. Die gleichen Eigenschaften gelten für Wellen im Spulenstrom des Elementarrelais und/oder Schaltzeiten des Elementarrelais.

In einer vorteilhaften Ausführungsform umfasst das Verfahren den folgenden Schritt: Erzeugen von generischen Transformationen basierend auf einer Dimensionsreduktion der erfassten Relais- und Lastgrößen, wobei die generischen Transformationen ausgebildet sind, basierend auf neuen Relais- und Lastgrößen des Elementarrelais, welche nicht in den erfassten Relais- und Lastgrößen enthalten sind, Kennwerte des Elementarrelais zu erzeugen.

Damit wird der technische Vorteil erreicht, dass mit den generischen Transformationen sich das Verfahren sehr gut verallgemeinern lässt. Über die Dimensionsreduktion wird der Zustandsraum in geeigneter Weise auf seine Basismerkmale reduziert, welche auch für neue Relais- und Lastgrößen gelten.

In einer vorteilhaften Ausführungsform des Verfahrens umfasst das Erzeugen von generischen Transformationen folgende Schritte: Bestimmen eines Zustandsraums der erfassten Relais- und Lastgrößen; Transformation des Zustandsraums in einen dimensionsreduzierten Zustandsraum; und Bestimmen der generischen Transformationen basierend auf dem dimensionsreduzierten Zustandsraum.

Damit wird der technische Vorteil erreicht, dass über die Dimensionsreduktion des Zustandsraums sich die Rechenkomplexität des Verfahrens reduziert, so dass schneller Aussagen zur Ausfallwahrscheinlichkeit getroffen werden können. Ferner kann einfachere Hardware bzw. Software eingesetzt werden.

In einer vorteilhaften Ausführungsform umfasst das Verfahren den folgenden Schritt: Bestimmen von zweiten Übertragungsfunktionen, welche aus den Kennwerten eine Mehrzahl von klassifikationsspezifischen Ausfallwahrscheinlichkeiten des Elementarrelais angeben, wobei jede der zweiten Übertragungsfunktionen auf unterschiedlichen Klassifikationen der Kennwerte basiert.

Die Verwendung mehrerer Klassifikationsverfahren in einem Ensemble ermöglicht den technischen Vorteil der Erweiterbarkeit des Vorhersagesystems: Werden zukünftig wichtige Kennwerte gefunden, welche z.B. neue Ausfallursachen erkennbar machen oder bestehende Vorhersagen zuverlässiger machen, so können diese, zusammen mit den entsprechenden Klassifikationsverfahren, dem Ensemble hinzugefügt werden.

Ferner wird der technische Vorteil erreicht, dass bei Verwendung mehrerer Klassifikationsverfahren die Kennwerte unter unterschiedlichen Gesichtspunkten gewichtet werden können. Die zweiten Übertragungsfunktionen erlauben damit, die Genauigkeit des Verfahrens zu steigern.

In einer vorteilhaften Ausführungsform umfasst das Verfahren den folgenden Schritt: Selektieren der entsprechenden Klassifikationen zur Bestimmung der zweiten Übertragungsfunktionen aus einem Ensemble von vorgegebenen Klassifikationsverfahren.

Damit wird der technische Vorteil erreicht, dass die relevanten Klassifikationen, welche für das Erkennen eines Ausfalls besonders bedeutsam sind, selektiert werden und zur Bestimmung der Ausfallwahrscheinlichkeit herangezogen werden. Damit erhöht sich die Genauigkeit der Ausfallvorhersage.

In einer vorteilhaften Ausführungsform umfasst das Verfahren den folgenden Schritt: Bestimmen einer Entscheider-Funktion basierend auf der Mehrzahl von klassifikationsspezifischen Ausfallwahrscheinlichkeiten des Elementarrelais, wobei die Entscheider-Funktion eine Abbildung der Mehrzahl von klassifikationsspezifischen Ausfallwahrscheinlichkeiten auf die resultierende Ausfallwahrscheinlichkeit vornimmt.

Damit wird der technische Vorteil erreicht, dass basierend auf einer breiten Basis von klassifikationsspezifischen Ausfallwahrscheinlichkeiten eine Entscheidung getroffen werden kann. Diese Entscheidung ist umso genauer je mehr Möglichkeiten, d.h. klassifikationsspezifische Ausfallwahrscheinlichkeiten zur Auswahl stehen.

In einer vorteilhaften Ausführungsform umfasst das Verfahren den folgenden Schritt: Parametrieren der Entscheider-Funktion basierend auf einer Mehrzahl von Hyperparametern.

Damit wird der technische Vorteil erreicht, dass über das Parametrieren der Hyperparameter das Verfahren sich effizient verallgemeinern lässt und sich damit auf andere, bisher noch nicht genutzte Datensätze anwenden lässt, um auch für diese eine präzise Ausfallwahrscheinlichkeit zu liefern.

In einer vorteilhaften Ausführungsform umfasst die Mehrzahl von Hyperparametern Folgendes: einen Grenzwert für die resultierende Ausfallwahrscheinlichkeit, eine Anzahl von aufeinanderfolgenden Vorhersagen, welche für eine Aussage Ausfall oder kein Ausfall herangezogen werden, und einen erforderlichen Mittelwert über die Anzahl der aufeinanderfolgenden Vorhersagen für einen Ausfall.

Damit wird der technische Vorteil erreicht, dass bei Einstellung der Hyperparameter basierend auf diesen Größen sich die Zeit reduzieren lässt, um ein Modell des Elementarrelais zu lernen. Mit einer geeigneten Wahl dieser Größen lässt sich die Leistungsfähigkeit der Ausfallvorhersage und die Lern-Rate des Systems erhöhen.

In einer vorteilhaften Ausführungsform umfasst das Verfahren die folgenden Schritte: Bestimmen der Mehrzahl von Hyperparametern als Funktion der Schaltspielzahl eines ersten Datensatzes von Schaltspieldurchläufen des Elementarrelais; und Anpassen der Mehrzahl von Hyperparametern an einen zweiten Datensatz von Schaltspieldurchläufen des Elementarrelais bezüglich eines Optimierungskriteriums, wobei das Optimierungskriterium auf einer Anzahl unerkannter Ausfälle und einer durchschnittlichen Restlebensdauer des Elementarrelais basiert.

Damit wird der technische Vorteil erreicht, dass über eine geeignete Wahl der Hyperparameter die Ausfallvorhersage mit einem ersten Datensatz an Messgrößen trainiert werden kann und mit einem zweiten Datensatz an Messgrößen optimiert werden kann.

In einer vorteilhaften Ausführungsform umfasst das Verfahren die folgenden Schritte: Durchlaufen des Verfahrens mit einem Trainingsdatensatz von Relais- und Lastgrößen; Anpassen des Maschinellen Lernalgorithmus für den Trainingsdatensatz basierend auf einem Optimierungskriterium bezüglich einer Anzahl unerkannter Ausfälle und einer durchschnittlichen Restlebensdauer des Elementarrelais; und Validieren des Verfahrens mit einem Testdatensatz von Relais- und Lastgrößen, welcher sich von dem Trainingsdatensatz unterscheidet.

Damit wird der technische Vorteil erreicht, dass der maschinelle Lernalgorithmus mit einem Trainingsdatensatz an Messgrößen trainiert werden kann und mit einem Testdatensatz an Messgrößen validiert werden kann. Z.B. kann der Trainingsdatensatz aus Laborversuchen stammen und der Testdatensatz kann aus Feldversuchen oder alternativ anderen Laborversuchen stammen.

Gemäß einem zweiten Aspekt wird die oben dargestellte Aufgabe gelöst durch eine Vorrichtung zur Ausfallvorhersage eines Elementarrelais, umfassend: eine Erfassungseinrichtung, die ausgebildet ist, messbare Relais- und Lastgrößen des Elementarrelais über eine Anzahl von Schaltspielen des Elementarrelais zu erfassen; und eine Bestimmungseinrichtung, die ausgebildet ist, Kennwerte des Elementarrelais basierend auf einer Gewichtung der erfassten Relais- und Lastgrößen gemäß einem Maschinellen Lernalgorithmus zu bestimmen, wobei die Kennwerte einen Funktionszustand des Elementarrelais zum jeweiligen Schaltspiel angeben, und eine Ausfallwahrscheinlichkeit des Elementarrelais basierend auf den ermittelten Kennwerten zu bestimmen.

Damit wird der technische Vorteil erreicht, dass mit einer solchen Vorrichtung der Ausfall des Elementarrelais besser vorhergesagt werden kann. Über die Gewichtung der erfassten Relais- und Lastgrößen gemäß einem Maschinellen Lernalgorithmus lässt sich das Elementarrelais in geeigneter Weise überwachen und so ein Funktionszustand des Relais zum jeweiligen Schaltspiel bestimmen. Aus den so gewonnenen Kennwerten lassen sich geeignete Aussagen zur Ausfallwahrscheinlichkeit ermitteln. Mit fortschreitender Alterung verändern sich die Kennwerte des Elementarrelais. Die Veränderung gibt Aufschluss über einen möglichen bzw. bevorstehenden Ausfall des Relais.

Gemäß einem dritten Aspekt wird die oben dargestellte Aufgabe gelöst durch ein computerlesbares nicht-flüchtiges Medium, auf dem Computerinstruktionen gespeichert sind, welche bei Ausführung auf einem Computer den Computer dazu veranlassen, das Verfahren gemäß dem ersten Aspekt auszuführen.

Gemäß einem vierten Aspekt wird die oben dargestellte Aufgabe gelöst durch ein Computerprogramm mit einem Programmcode zum Ausführen des Verfahrens gemäß dem ersten Aspekt, wenn das Computerprogramm auf einem Computer oder Prozessor läuft.

Weitere Ausführungsbeispiele werden Bezug nehmend auf die beiliegenden Zeichnungen erläutert. Es zeigen:
- Fig. 1: eine Schaltplandarstellung eines Elementarrelais 100 mit einem Wechselkontakt;
- Fig. 2: eine schematische Darstellung eines Verfahrens 200 zur Ausfallvorhersage eines Elementarrelais 100 gemäß der Offenbarung;
- Fig. 3: eine schematische Darstellung eines Verfahrens 300 zur Ausfallvorhersage eines Elementarrelais 100 gemäß einer Ausführungsform;
- Fig. 4: eine schematische Darstellung der Anpassung und Validierung der Algorithmen in einem Verfahren 400 zur Ausfallvorhersage eines Elementarrelais 100 gemäß einer Ausführungsform; und
- Fig. 5: eine schematische Darstellung einer Vorrichtung 500 zur Ausfallvorhersage eines Elementarrelais 100 gemäß der Offenbarung.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

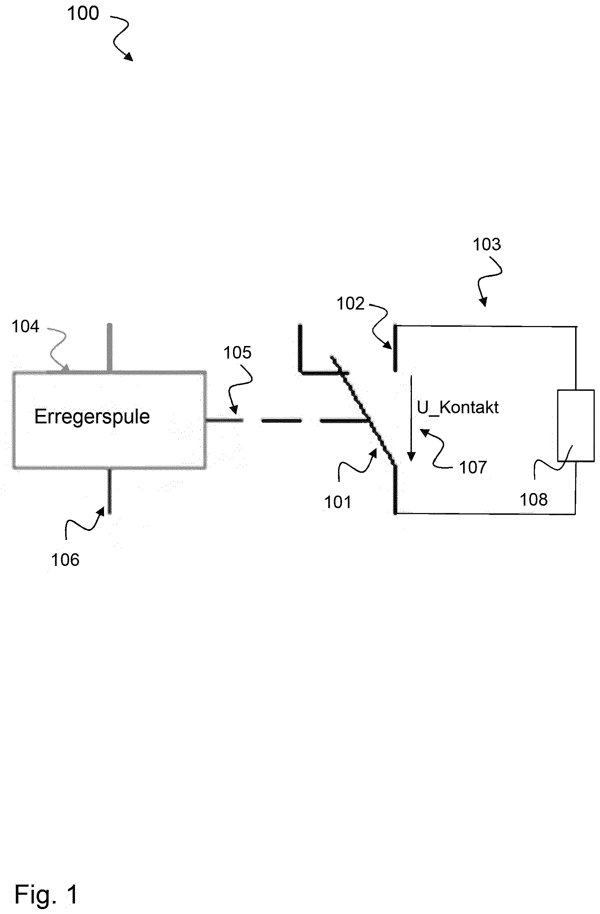

Fig. 1 zeigt eine Schaltplandarstellung eines Elementarrelais 100 mit einem Wechselkontakt bzw. Lastkontakt 102. Das Elementarrelais 100 umfasst einen Schalter 101 zum Schalten eines Lastkontaktes 102 eines Laststromkreises 103 und eine Erregerspule 104 zum Betätigen 105 des Schalters 101. Die Erregerspule 104 kann z.B. durch Anlegen einer Spannung an den beiden Kontakten 106 der Spule 104 erregt bzw. aktiviert werden. Dann entsteht ein Magnetfeld, durch das eine Kraft auf den Schalter 101 ausgeübt wird, so dass der Lastkontakt 102 geschaltet und damit der Laststromkreis 103 mit Last 108 eingeschaltet wird. Die Krafteinwirkung kann beispielsweise über einen Anker (nicht dargestellt) erfolgen. Wird die Spannung von den beiden Kontakten 106 der Spule 104 weggeschaltet bzw. deaktiviert, so kehrt der Schalter 101 wieder in seine Ausgangsposition (gemäß der Darstellung in Fig. 1) zurück und der Lastkontakt 102 ist ausgeschaltet und damit auch der Laststromkreis 103. Beim Einschaltvorgang wird die Kontaktspannung 107 am Lastkontakt 102 abgebaut, d.h. sie geht über von einer Leerlaufspannung zu einer Kurzschlussspannung gegen Null.

Das Elementarrelais 100 kann beispielsweise als mechanisches Relais ausgeführt sein. Das mechanische Relais arbeitet meist nach dem Prinzip des Elektromagneten. Ein Strom in der Erregerspule erzeugt einen magnetischen Fluss durch den ferromagnetischen Kern und einen daran befindlichen, beweglich gelagerten, ebenfalls ferromagnetischen Anker. An einem Luftspalt kommt es zur Krafteinwirkung auf den Anker, wodurch dieser einen oder mehrere Kontakte schaltet. Der Anker wird durch Federkraft in die Ausgangslage zurückversetzt, sobald die Spule nicht mehr erregt ist.

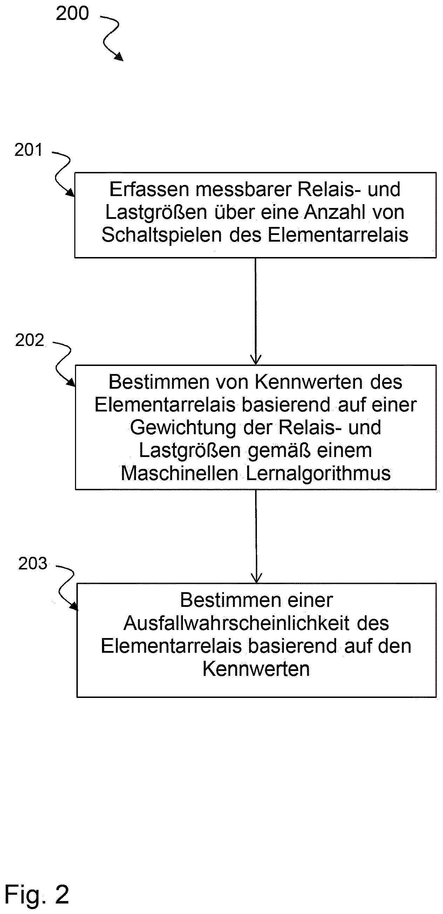

Fig. 2 zeigt eine schematische Darstellung eines Verfahrens 200 zur Ausfallvorhersage eines Elementarrelais 100 gemäß der Offenbarung. Das Elementarrelais ist beispielsweise ein Elementarrelais 100 wie in Figur 1 beschrieben. D.h. es umfasst einen Schalter 101 zum Schalten eines Lastkontaktes 102 eines Laststromkreises 103 und eine Erregerspule 104 zum Betätigen 105 des Schalters 101.

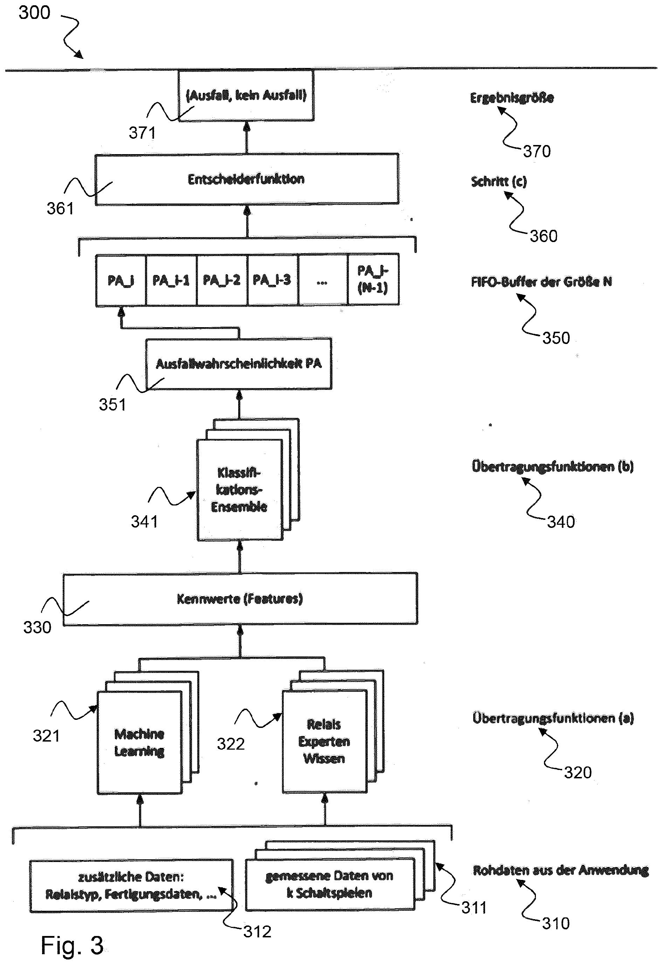

Das Verfahren 200 umfasst die folgenden Schritte: Erfassen 201 messbarer Relais- und Lastgrößen des Elementarrelais 100 über eine Anzahl von Schaltspielen des Elementarrelais 100; Bestimmen 202 von Kennwerten des Elementarrelais 100 basierend auf einer Gewichtung der erfassten Relais- und Lastgrößen gemäß einem Maschinellen Lernalgorithmus, wobei die Kennwerte einen Funktionszustand des Elementarrelais 100 zum jeweiligen Schaltspiel angeben; und Bestimmen 203 einer Ausfallwahrscheinlichkeit des Elementarrelais 100 basierend auf den ermittelten Kennwerten. Die messbaren Relais- und Lastgrößen des Elementarrelais 100 können beispielsweise den in Figur 3 beschriebenen Rohdaten 310 aus der Anwendung entsprechen, z.B. den gemessenen Daten 311 von k Schaltspielen und/oder den zusätzlichen Daten 312 umfassend Relaistyp, Fertigungsdaten etc. Die Kennwerte des Elementarrelais 100 können beispielsweise den in Figur 3 beschriebenen Kennwerten 330 des Elementarrelais 100 entsprechen. Der Maschinellen Lernalgorithmus kann beispielsweise dem in Figur 3 beschriebenen Maschinellen Lernalgorithmus 321 entsprechen. Die Ausfallwahrscheinlichkeit des Elementarrelais 100 kann z.B. der in Figur 3 beschriebenen Ausfallwahrscheinlichkeit 370 entsprechen.

In einem Ausführungsbeispiel umfasst das Verfahren 200 den Schritt des Bestimmens 203 der Ausfallwahrscheinlichkeit 370 des Elementarrelais 100 basierend auf einer Veränderung der Kennwerte 330 bezüglich der Anzahl von Schaltspielen.

In einem Ausführungsbeispiel basiert der Maschinelle Lernalgorithmus 321 auf einer Datenbasis, welche Relais- und Lastgrößen 310 von Elementarrelais 100 für verschiedene Schaltspiele umfasst, wobei die Relais- und Lastgrößen 310 der Elementarrelais 100 auf Aufzeichnungen mit verschiedenen Lasten 108 und Relaistypen basieren, wie in Figur 3 näher beschrieben.

In einem Ausführungsbeispiel umfasst die Datenbasis ferner Informationen über Ausfallschaltspielzahl, Ausfallart und/oder Ausfallursache der Elementarrelais 100 bei den verschiedenen Lasten 108 und Relaistypen.

In einem Ausführungsbeispiel umfasst das Verfahren 200 ein Identifizieren der Kennwerte 330 basierend auf den Informationen über Ausfallschaltspielzahl, Ausfallart und/oder Ausfallursache der Elementarrelais 100; und ein Bestimmen von ersten Übertragungsfunktionen 320, welche aus den messbaren Relais- und Lastgrößen 310 die Kennwerte 330 erzeugen, wie in Figur 3 näher beschrieben.

Die Kennwerte 330 können mit der Ausfallursache und/oder Ausfallart der Elementarrelais 100 in Verbindung stehen und/oder sich vor einem Ausfall verändern. Die Kennwerte 330 können z.B. Kontaktrauschen der Elementarrelais 100, Wellen im Spulenstrom der Elementarrelais 100 und/oder Schaltzeiten der Elementarrelais 100 umfassen.

In einem Ausführungsbeispiel umfasst das Verfahren 200 ein Erzeugen von generischen Transformationen basierend auf einer Dimensionsreduktion der erfassten Relais- und Lastgrößen 310. Die generischen Transformationen sind ausgebildet, basierend auf neuen Relais- und Lastgrößen des Elementarrelais 100, welche nicht in den erfassten Relais- und Lastgrößen 310 enthalten sind, Kennwerte 330 des Elementarrelais 100 zu erzeugen, wie in Figur 3 näher beschrieben.

In einem Ausführungsbeispiel umfasst das Erzeugen von generischen Transformationen die folgenden Schritte: Bestimmen eines Zustandsraums der erfassten Relais- und Lastgrößen 310; Transformation des Zustandsraums in einen dimensionsreduzierten Zustandsraum; und Bestimmen der generischen Transformationen basierend auf dem dimensionsreduzierten Zustandsraum, wie in Figur 3 näher beschrieben.

In einem Ausführungsbeispiel umfasst das Verfahren 200 ein Bestimmen von zweiten Übertragungsfunktionen 340, welche aus den Kennwerten 330 eine Mehrzahl von klassifikationsspezifischen Ausfallwahrscheinlichkeiten 351 des Elementarrelais 100 angeben, wie z.B. in Figur 3 näher beschrieben. Jede der zweiten Übertragungsfunktionen 340 kann auf unterschiedlichen Klassifikationen 341 der Kennwerte 330 basieren.

In einem Ausführungsbeispiel umfasst das Verfahren 200 ein Selektieren der entsprechenden Klassifikationen 341 zur Bestimmung der zweiten Übertragungsfunktionen 340 aus einem Ensemble von vorgegebenen Klassifikationsverfahren 341, wie z.B. in Figur 3 näher beschrieben.

In einem Ausführungsbeispiel umfasst das Verfahren 200 ein Bestimmen einer Entscheider-Funktion 361 basierend auf der Mehrzahl von klassifikationsspezifischen Ausfallwahrscheinlichkeiten 351 des Elementarrelais 100, wobei die Entscheider-Funktion 361 eine Abbildung der Mehrzahl von klassifikationsspezifischen Ausfallwahrscheinlichkeiten 351 auf die Ausfallwahrscheinlichkeit 370 vornimmt, wie z.B. in Figur 3 detailliert beschrieben.

In einem Ausführungsbeispiel umfasst das Verfahren 200 ein Parametrieren der Entscheider-Funktion 361 basierend auf einer Mehrzahl von Hyperparametern, wie z.B. in Figur 3 detailliert beschrieben.

Die Mehrzahl von Hyperparametern kann Folgendes umfassen: einen Grenzwert für die Ausfallwahrscheinlichkeit 370, eine Anzahl von aufeinanderfolgenden Vorhersagen, welche für eine Aussage Ausfall oder kein Ausfall 371 herangezogen werden, und einen erforderlichen Mittelwert über die Anzahl der aufeinanderfolgenden Vorhersagen für einen Ausfall 370.

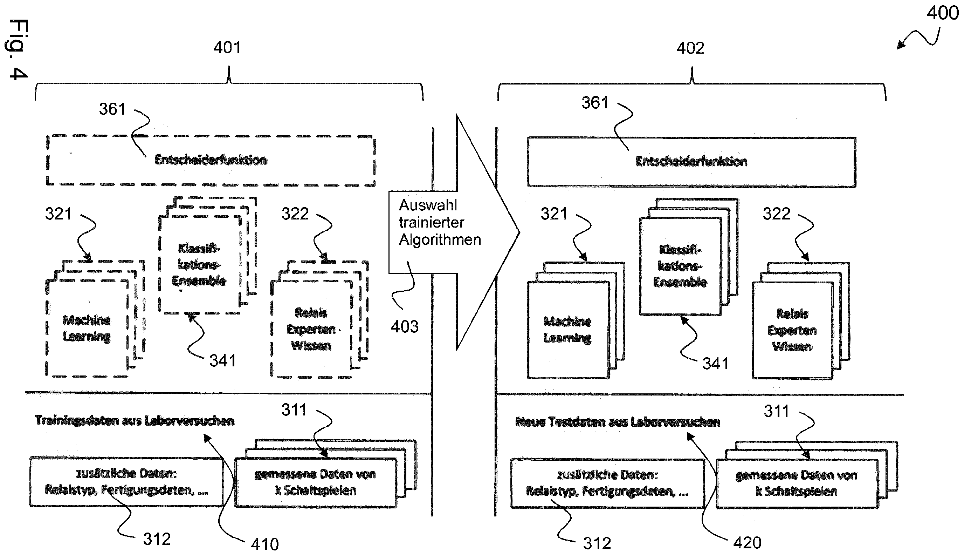

In einem Ausführungsbeispiel umfasst das Verfahren 200 ein Bestimmen der Mehrzahl von Hyperparametern als Funktion der Schaltspielzahl eines ersten Datensatzes 410 von Schaltspieldurchläufen des Elementarrelais 100, wie z.B. in Figur 4 beschrieben; und ein Anpassen der Mehrzahl von Hyperparametern an einen zweiten Datensatz 420 von Schaltspieldurchläufen des Elementarrelais 100 bezüglich eines Optimierungskriteriums 403, wie beispielsweise in Figur 4 beschrieben. Das Optimierungskriterium 403 kann beispielsweise auf einer Anzahl unerkannter Ausfälle und einer durchschnittlichen Restlebensdauer des Elementarrelais 100 basieren, wie z.B. zu den Figuren 3 und 4 beschrieben.

In einem Ausführungsbeispiel umfasst das Verfahren 200 ein Durchlaufen des Verfahrens 200 mit einem Trainingsdatensatz 410 von Relais- und Lastgrößen 310, wie z.B. zu Figur 4 beschreiben; ein Anpassen des Maschinellen Lernalgorithmus 321 für den Trainingsdatensatz 410 basierend auf einem Optimierungskriterium bezüglich einer Anzahl unerkannter Ausfälle und einer durchschnittlichen Restlebensdauer des Elementarrelais 100, wie zu Figur 4 beschrieben; und ein Validieren des Verfahrens 200 mit einem Testdatensatz 420 von Relais- und Lastgrößen 310, welcher sich von dem Trainingsdatensatz 410 unterscheidet.

Ausführungsbeispiele des Verfahrens 200 werden zu den Figuren 3 und 4 im Folgenden näher beschrieben.

Fig. 3 zeigt eine schematische Darstellung eines Verfahrens 300 zur Ausfallvorhersage eines Elementarrelais 100 gemäß einer Ausführungsform.

Das Verfahren 300 umfasst ein Erfassen 201 messbarer Relais- und Lastgrößen 310 des Elementarrelais 100 über eine Anzahl von Schaltspielen des Elementarrelais 100, wie oben zu Figur 2 beschrieben. Die messbaren Relais- und Lastgrößen 310 können Rohdaten 310 aus der Anwendung entsprechen und gemessene Daten 311 von k Schaltspielen umfassen. Zusätzlich können Daten zum Relaistyp, Fertigungsdaten etc. als zusätzliche Daten 312 erfasst werden. Als messbare Relais- und Lastgrößen 310 sind alle Messgrößen des Relais 100 und des Laststromkreises 103 zu verstehen. Es kann sich dabei um Ströme oder Spannungen über der Spule 104 des Relais 100 oder dem Schalter 101 des Relais 100 handeln oder um Ströme oder Spannungen im Laststromkreis 103, z.B. an der Lastimpedanz 108 oder am Lastkontakt 102.

Das Verfahren 300 umfasst ferner ein Bestimmen 202 von Kennwerten 330 des Elementarrelais 100 basierend auf einer Gewichtung der erfassten Relais- und Lastgrößen 310 gemäß einem Maschinellen Lernalgorithmus 321, wobei die Kennwerte 330 einen Funktionszustand des Elementarrelais 100 zum jeweiligen Schaltspiel angeben. Neben dem maschinellen Lernalgorithmus 321 kann eine Datenbasis mit Expertenwissen 322 des Relais genutzt werden, um die Kennwerte 330 zu bestimmen. Die Transformation der Rohdaten 310 aus der Anwendung bzw. der messbaren Relais- und Lastgrößen 310 in die Kennwerte 330 kann unter Verwendung von ersten Übertragungsfunktionen 320 ausgeführt werden.

Das Verfahren 300 umfasst ferner ein Bestimmen 203 einer Ausfallwahrscheinlichkeit 370 des Elementarrelais 100 basierend auf den ermittelten Kennwerten 330. Dazu werden verschiedene Klassifikationsverfahren bzw. ein Klassifikationsensemble 341 auf die Kennwerte 330 angewandt um so verschieden klassifikationsspezifische Ausfallwahrscheinlichkeiten PA 351 zu bestimmen, welche in einem Speicher, z.B. FIFO Buffer der Größe N gespeichert werden. Zur Transformation der Kennwerte 330 auf die klassifikationsspezifischen Ausfallwahrscheinlichkeiten PA 351 werden zweite Übertragungsfunktionen 340 genutzt. Eine Entscheider-Funktion 361 wird in einem weiteren Schritt 360 dazu genutzt, um aus den klassifikationsspezifischen Ausfallwahrscheinlichkeiten PA 351 die Ergebnisgröße 370, d.h. die Ausfallwahrscheinlichkeit 370 zu bestimmen, d.h. eine Entscheidung auf Ausfall oder keinen Ausfall 371 des Elementarrelais 100.

Im Folgenden werden verschiedene Ausführungsbeispiele zur Ausführung der in Figur 3 dargestellten Komponenten des Verfahrens 300 beschrieben.

Vor den Lebensdauertests werden die Relais elektrisch vermessen. Im Labor werden Lebensdauertests mit verschiedenen Lasten und Relaistypen durchgeführt. Es werden Relais- und Lastsignale 311 für jedes Schaltspiel aufgenommen (Ein- und Ausschaltvorgang). Ausfallschaltspielzahl, Ausfallart und -ursache werden ermittelt.

Anschließend folgt die Datenanalyse. Dazu werden in einem iterativen Prozess (a) Kennwerte 330 aus den Daten 310 zu jedem Schaltspiel ermittelt und (b) deren Zusammenhang zum Ausfall bestimmt. Das Ergebnis sind eine oder mehrere Übertragungsfunktionen 320 aus (a), hierin auch als erste Übertragungsfunktionen 320 bezeichnet, welche als Eingabegrößen die Daten 310 zu den Schaltspielen haben und als Ausgabegrößen die dazugehörigen Kennwerte 330. Eine zweite Übertragungsfunktion 340 aus (b) berechnet aus dem Kennwertesatz die Ausfallwahrscheinlichkeit 351 zum Zeitpunkt des Schaltspiels.

Zur Ermittlung der Kennwerte 330 können auch Daten 310 von "k" aufeinanderfolgenden Schaltspielen zu einem Kennwertesatz zusammengefasst werden.

Es können mehrere verschiedene Methoden zur Generierung der Kennwerte 330 eingesetzt werden. Jede Methode erzeugt ihre eigenen Kennwerte 330, der Kennwertesatz ist die Summe aus allen Kennwerten 330.

Methoden zur Generierung der Kennwerte 330 basieren auf maschinellen Lernalgorithmen 321 und auf Expertenwissen 322.

Maschinellen Lernalgorithmen 321 (wie z.B. Verfahren zur Dimensionsreduktion) werden eingesetzt, um generische, robuste Transformationen 320 zu erzeugen, welche auch mit neuen Signalformen funktionieren, die nicht in den Trainingsdaten aus den Laborversuchen enthalten sind, d.h. sie verallgemeinern gut.

Mithilfe von geeigneten Verfahren (z.B. "Principal Component Analysis", Neuronale Netzwerke, etc.) wird der Zustandsraum eines Signals aus den Trainingsdaten bestimmt. Anschließend wird er in einen Zustandsraum mit weniger Dimensionen transformiert, wobei einige Informationen verloren gehen können (möglichst wenige). Mithilfe dieser gelernten Transformationsvorschrift 320 lässt sich das Signal (z.B. 200 Messpunkte) mit weniger Punkten (z.B. 10) ausreichend genau approximieren.

Die "Principal Component Analysis" (PCA) oder auch Hauptkomponentenanalyse (das mathematische Verfahren ist auch bekannt als Hauptachsentransformation oder Singulärwertzerlegung) ist ein Verfahren der multivariaten Statistik. Sie dient dazu, umfangreiche Datensätze zu strukturieren, zu vereinfachen und zu veranschaulichen, indem eine Vielzahl statistischer Variablen durch eine geringere Zahl möglichst aussagekräftiger Linearkombinationen (die "Hauptkomponenten") genähert wird.

Mithilfe von Expertenwissen 322 werden Kennwerte 330 identifiziert, die mit der Ausfallursache in Verbindung stehen können oder die sich vor einem Ausfall verändern, z.B.: Kontaktrauschen, Wellen im Spulenstrom, Schaltzeiten, etc. Die Übertragungsfunktonen 320, welche aus den Signalen 310 diese Kennwerte generieren, können manuell programmiert oder mithilfe von maschinellen Lernalgorithmen 321 gelernt werden.

Für das Finden eines Zusammenhangs zum Ausfall werden verschiedene Klassifikationsverfahren 341 verwendet, z.B. "Random Forest Trees". Das Aussuchen der geeigneten Verfahren und die Verwendung der optimalen (Verfahrens-) Parameter ist Ziel des iterativen Optimierungsprozesses. Mehrere Klassifikationsverfahren können zusammen in einem Ensemble 341 arbeiten.

Ein "Random Forest Tree" ist ein Klassifikationsverfahren, das aus mehreren unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald eine Entscheidung treffen und die Klasse mit den meisten Stimmen entscheidet die endgültige Klassifikation. Random Forest Trees können auch zur Regression eingesetzt werden.

Als letzter Schritt (c) 360 wird eine übergeordnete Entscheider-Funktion 361 erzeugt. Eingabegrößen sind "N" Ausfallwahrscheinlichkeiten 351 aus (b) und Ausgabewert ist eine binäre Größe: Ausfall oder kein Ausfall 371. Sogenannte Hyperparameter dieser Entscheider-Funktion sind (I) Grenzwert für die Ausfallwahrscheinlichkeit GW_PA (z.B.: >80% ist ein Ausfall), (II) Anzahl aufeinanderfolgender Vorhersagen N, welche für die Aussage Ausfall oder kein Ausfall 371 herangezogen werden und (III) erforderlicher Mittelwert MW über "N" Vorhersagen für einen Ausfall (z.B.: 50%). Diese Hyperparameter können sowohl statisch als auch als Funktion der Schaltspielzahl angegeben werden.

Hyperparameter sind Variablen, mit denen das Verhalten einer Funktion parametriert werden kann. Beim maschinellen Lernen ist ein Hyperparameter ein Parameter, dessen Wert eingestellt wird, bevor der Lernprozess beginnt. Die Werte anderer Parameter werden dagegen durch Training abgeleitet. Unterschiedliche Modelltrainingsalgorithmen erfordern unterschiedliche Hyperparameter. Bei diesen Hyperparametern lernt der Trainingsalgorithmus die Parameter aus den Daten.

In einem Beispiel (statisch) werden die Hyperparameter wie folgt gewählt: GW_PA=70%, N=100, MW=50%. Das Klassifikationsensemble (b) 341 berechnet für 100 Kennwertesätze 100 Ausfallwahrscheinlichkeiten 351. Diese werden der Entscheider-Funktion 361 übergeben. Alle Ausfallwahrscheinlichkeiten 351 über 70% stimmen für einen Ausfall, die anderen für keinen Ausfall. Liegt der Mittelwert über 50%, so ist das Ergebnis 370 der Entscheider-Funktion 361 "Ausfall", ansonsten "kein Ausfall".

Diese Hyperparameter werden mithilfe des Trainingsdatensatzes 410 optimiert 403 (siehe Figur 4). Dafür werden die aufgezeichneten Lebensdauern wie in einer Simulation durchlaufen, bis die Entscheider-Funktion 361 bei einem Schaltspiel einen Ausfall prognostiziert. Die dazugehörige Schaltspielzahl wird mit der tatsächlichen Ausfallschaltspielzahl des Relais verglichen.

Die Schaltspielzahl-Differenz vom prognostizierten Ausfall bis zum tatsächlichen Ausfall wird als "Restlebensdauer" erfasst. Ist das Relais im Lebensdauertest ausgefallen und die Entscheider-Funktion 361 hat vorher keinen Ausfall prognostiziert, so gilt der Ausfall dieses Relais als "unerkannt".

Bei der Optimierung der Hyperparameter gilt es, einen Kompromiss zwischen der Anzahl unerkannter Ausfälle und der durchschnittlichen Restlebensdauer zu finden. Eine Metrik (oder mehrere solcher Metriken) wird verwendet, um diesen Kompromiss mathematisch darzustellen.

Die Angabe der Hyperparameter als Funktion der Schaltspielzahl bietet eine Möglichkeit, die Sensitivität der Ausfallprognose über die Lebensdauer anzupassen. Zu Beginn ist ein Ausfall unwahrscheinlich und die Entscheider-Funktion 361 sollte sich sehr sicher sein, dass tatsächlich ein Ausfall bevorsteht (z.B. >90%). Mit zunehmender Lebensdauer nimmt die Ausfallwahrscheinlichkeit zu, unerkannte Ausfälle rücken in den Fokus. Jetzt tauscht man vielleicht schon bei einer Vorhersagewahrscheinlichkeit von 60% das Relais aus.

Über eine Variation der verwendeten Kennwerte 330 und Methoden zur Kennwertgenerierung wird mit dem Trainingsdatensatz 410 untersucht, welche Kombination aus Kennwerten / Methoden / Hyperparametern die besten Ergebnisse in Bezug auf eine geringe Restlebensdauer und gleichzeitig wenige unerkannter Ausfälle liefert.

Mithilfe eines Testdatensatzes 420 (siehe Figur 4) werden die Ergebnisse überprüft. Schneidet das Verfahren auf dem Testdatensatz 420 schlechter ab als auf dem Trainingsdatensatz 410, ist das ein Zeichen dafür, dass die verwendeten Methoden die Trainingsdaten 410 überanpassen ("overfitten"). Je nach verwendeten Methoden können Gegenmaßnahmen ergriffen werden, bis keine Überanpassung mehr auftritt. Die Überprüfung sollte dabei immer mit unbekannten (neuen) Datensätzen erfolgen.

Bei der Anwendung im Gerät werden zu jedem Schaltspiel Signale aufgenommen. Die Übertragungsfunktionen (a) 320 berechnen Kennwerte 330 aus den Signalen 310 der letzten "k" Schaltspiele. Aus diesen Kennwerten 330 wird von dem Klassifikationsensemble (b) 341 eine Ausfallschaltspielzahl berechnet und in einem FIFO 350 der Länge "N" gespeichert. Die Signale 310 und deren Kennwerte 330 können daraufhin verworfen werden. Die Entscheider-Funktion 361 berechnet zu jeder Veränderung des FIFOs 350 eine Ausfall-Prognose 370: "Ausfall" oder "kein Ausfall" 371. Je nach Anwendungsprofil kann auf die Prognose 370 reagiert werden.

Fig. 4 zeigt eine schematische Darstellung der Anpassung und Validierung der Algorithmen in einem Verfahren 400 zur Ausfallvorhersage eines Elementarrelais 100 gemäß einer Ausführungsform.

Der linke Teil von Figur 4 zeigt die Anpassungsphase 401, in welcher eine Anpassung der Algorithmen an die Labordaten bzw. Trainingsdaten 410 aus Laborversuchen erfolgt. Der rechte Teil von Figur 4 zeigt die Validierungsphase 402 oder Testphase, in welcher eine Validierung der Algorithmen mit anderen Labordaten bzw. neuen Testdaten 420 aus Laborversuchen erfolgt.

In der Anpassungsphase 401 werden Trainingsdaten 410 aus Laborversuchen erfasst entsprechend dem oben bezeichneten Schritt des Erfassens messbarer Relais- und Lastgrößen. Hierzu werden gemessene Daten von k Schaltspielen 311 und zusätzliche Daten 312, wie Relaistyp, Fertigungsdaten, etc. verwendet, wie oben zu den Figuren 2 und 3 näher beschrieben. Danach erfolgt die Verarbeitung über maschinelle Lernalgorithmen 321, Experten-Wissen 322 zu Relais und Klassifikations-Ensemble 341, wie oben zu Figur 3 beschrieben. Schließlich die Entscheidung des Ausfallresultats basierend auf der Entscheider-Funktion 361, wie oben zu Figur 3 beschrieben.

In der Validierungsphase 402 oder Testphase werden neue Testdaten 410 aus Laborversuchen erfasst entsprechend dem oben bezeichneten Schritt des Erfassens messbarer Relais- und Lastgrößen. Hierzu werden gemessene Daten von k Schaltspielen 311 und zusätzliche Daten 312, wie Relaistyp, Fertigungsdaten, etc. verwendet, wie oben zu den Figuren 2 und 3 näher beschrieben. Danach erfolgt die Verarbeitung über maschinelle Lernalgorithmen 321, Experten-Wissen 322 zu Relais und Klassifikations-Ensemble 341, wie oben zu Figur 3 beschrieben. Schließlich die Entscheidung des Ausfallresultats basierend auf der Entscheider-Funktion 361, wie oben zu Figur 3 beschrieben.

Der Unterschied zwischen Anpassungsphase 401 und Validierungsphase 402 liegt lediglich in der Verwendung anderer Eingangsdatensätze.

In der Anpassungsphase 401 der Algorithmen an die Labordaten wird ein iterativer Trainingsprozess ausgeführt mit 1. Auswahl von maschinellen Lernalgorithmen 321 und Experten-Übertragungsfunktionen 322; 2. Trainieren der Algorithmen; und 3. Optimierung der Hyperparameter. Als Optimierungskriterien (für das Gesamtverfahren) werden verwendet: 1. Restlebensdauer; und 2. Anzahl unerkannter Ausfälle.

In der Validierungsphase 402 der Algorithmen mit anderen Labordaten werden die trainierten Algorithmen auf neue Testdaten 420 angewendet und es wird eine Auswahl 403 trainierter Algorithmen gemäß einem Optimierungskriterium getroffen. Als trainierte Algorithmen werden hier die maschinellen Lernalgorithmen 321, das Experten-Wissen 322 und die Klassifikations-Ensemble 341 verstanden.

In der Validierungsphase 402 erfolgt eine Überprüfung des gesamten Verfahrens sowie der Teilkomponenten in Bezug auf eine übermäßige Anpassung an die Trainingsdaten ("Overfitting").

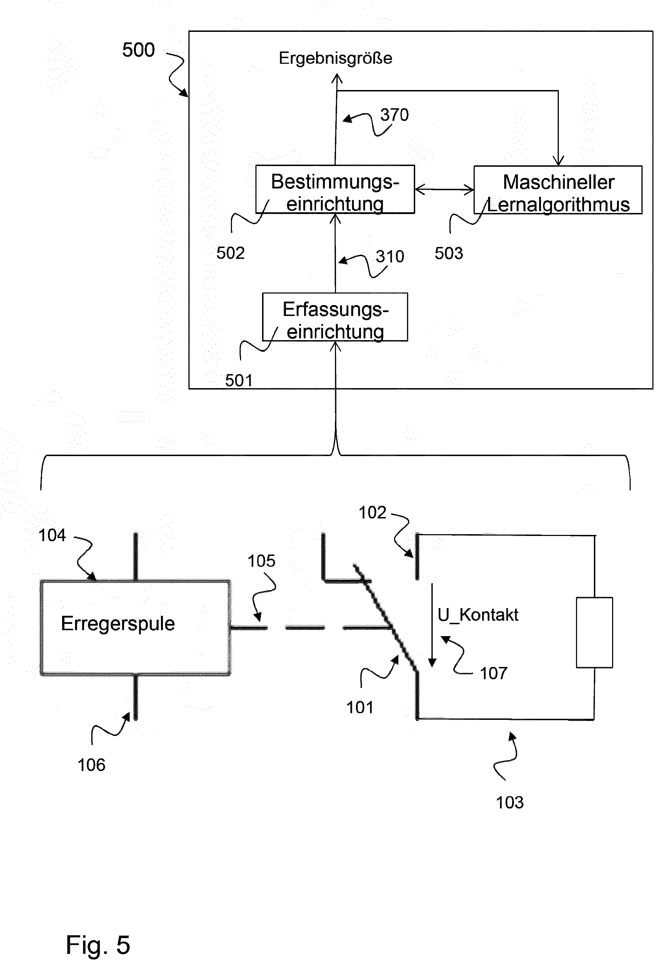

Fig. 5 zeigt eine schematische Darstellung einer Vorrichtung 500 zur Ausfallvorhersage eines Elementarrelais 100 gemäß der Offenbarung. Das Elementarrelais ist beispielsweise ein Elementarrelais 100 wie in Figur 1 beschrieben. D.h. es umfasst einen Schalter 101 zum Schalten eines Lastkontaktes 102 eines Laststromkreises 103 und eine Erregerspule 104 zum Betätigen 105 des Schalters 101. Die Vorrichtung 500 umfasst eine Erfassungseinrichtung 501 und eine Bestimmungseinrichtung 502.

Die Erfassungseinrichtung 501 ist ausgebildet, messbare Relais- und Lastgrößen 310 des Elementarrelais 100 über eine Anzahl von Schaltspielen des Elementarrelais 100 zu erfassen, z.B. gemäß der Beschreibung zu den Figuren 2 bis 4.

Die Bestimmungseinrichtung 502 ist ausgebildet, Kennwerte 330 des Elementarrelais 100 basierend auf einer Gewichtung der erfassten Relais- und Lastgrößen 310 gemäß einem Maschinellen Lernalgorithmus 503 zu bestimmen, z.B. gemäß der Beschreibung zu den Figuren 2 bis 4. Die Kennwerte 330 geben einen Funktionszustand des Elementarrelais 100 zum jeweiligen Schaltspiel an. Die Bestimmungseinrichtung 502 ist ferner ausgebildet, eine Ausfallwahrscheinlichkeit 370 des Elementarrelais 100 basierend auf den ermittelten Kennwerten 330 zu bestimmen, z.B. gemäß der Beschreibung zu den Figuren 2 bis 4.

Anstelle eines Elementarrelais 100 können die in dieser Offenbarung beschriebenen Techniken auch allgemein auf elektronische Komponenten, z.B. Prozessoren, Chips, Controller, Speicher, Register, Ein-/Ausgabeeinheiten, Computer oder Maschinenkomponenten angewendet werden, um eine Ausfallwahrscheinlichkeit dieser elektronischen Komponenten zu bestimmen.

## Patentansprüche

1. Computerimplementiertes Verfahren (200) zur Ausfallvorhersage eines Elementarrelais (100), wobei das Verfahren (200) die folgenden Schritte umfasst:
Erfassen (201) messbarer Relais- und Lastgrößen (310) des Elementarrelais (100) über eine Anzahl von Schaltspielen des Elementarrelais (100);
wobei das Verfahren **gekennzeichnet ist durch** die weiteren Schritte:
Bestimmen (202) von Kennwerten (330) des Elementarrelais (100) basierend auf einer Gewichtung der erfassten Relais- und Lastgrößen (310) gemäß einem Maschinellen Lernalgorithmus (321), wobei die Kennwerte (330) einen Funktionszustand des Elementarrelais (100) zum jeweiligen Schaltspiel angeben;
Bestimmen (203) einer Ausfallwahrscheinlichkeit (370) des Elementarrelais (100) basierend auf den ermittelten Kennwerten (330); und
Bestimmen (203) der Ausfallwahrscheinlichkeit (370) des Elementarrelais (100) basierend auf einer Veränderung der Kennwerte (330) bezüglich der Anzahl von Schaltspielen.

2. Verfahren (200) nach Anspruch 1,
wobei der Maschinelle Lernalgorithmus (321) auf einer Datenbasis basiert, welche Relais- und Lastgrößen (310) von Elementarrelais (100) für verschiedene Schaltspiele umfasst, wobei die Relais- und Lastgrößen (310) der Elementarrelais (100) auf Aufzeichnungen mit verschiedenen Lasten (108) und Relaistypen basieren.

3. Verfahren (200) nach Anspruch 2,
wobei die Datenbasis ferner Informationen über Ausfallschaltspielzahl, Ausfallart und/oder Ausfallursache der Elementarrelais (100) bei den verschiedenen Lasten (108) und Relaistypen umfasst.

4. Verfahren (200) nach Anspruch 3, mit:
Identifizieren der Kennwerte (330) basierend auf den Informationen über Ausfallschaltspielzahl, Ausfallart und/oder Ausfallursache der Elementarrelais (100); und
Bestimmen von ersten Übertragungsfunktionen (320), welche aus den messbaren Relais- und Lastgrößen (310) die Kennwerte (330) erzeugen.

5. Verfahren (200) nach Anspruch 4,
wobei die Kennwerte (330) mit der Ausfallursache und/oder Ausfallart der Elementarrelais (100) in Verbindung stehen und/oder sich vor einem Ausfall verändern und insbesondere Kontaktrauschen der Elementarrelais (100), Wellen im Spulenstrom der Elementarrelais (100) und/oder Schaltzeiten der Elementarrelais (100) umfassen.

6. Verfahren (200) nach einem der vorstehenden Ansprüche, mit:
Erzeugen von generischen Transformationen basierend auf einer Dimensionsreduktion der erfassten Relais- und Lastgrößen (310),
wobei die generischen Transformationen ausgebildet sind, basierend auf neuen Relais- und Lastgrößen des Elementarrelais (100), welche nicht in den erfassten Relais- und Lastgrößen (310) enthalten sind, Kennwerte (330) des Elementarrelais (100) zu erzeugen.

7. Verfahren (200) nach Anspruch 6, wobei das Erzeugen von generischen Transformationen folgende Schritte umfasst:
Bestimmen eines Zustandsraums der erfassten Relais- und Lastgrößen (310);
Transformation des Zustandsraums in einen dimensionsreduzierten Zustandsraum; und
Bestimmen der generischen Transformationen basierend auf dem dimensionsreduzierten Zustandsraum.

8. Verfahren (200) nach einem der vorstehenden Ansprüche, mit:
Bestimmen von zweiten Übertragungsfunktionen (340), welche aus den Kennwerten (330) eine Mehrzahl von klassifikationsspezifischen Ausfallwahrscheinlichkeiten (351) des Elementarrelais (100) angeben,
wobei jede der zweiten Übertragungsfunktionen (340) auf unterschiedlichen Klassifikationen (341) der Kennwerte (330) basiert.

9. Verfahren (200) nach Anspruch 8, mit:
Selektieren der entsprechenden Klassifikationen (341) zur Bestimmung der zweiten Übertragungsfunktionen (340) aus einem Ensemble von vorgegebenen Klassifikationsverfahren (341).

10. Verfahren (200) nach Anspruch 8 oder 9, mit:
Bestimmen einer Entscheider-Funktion (361) basierend auf der Mehrzahl von klassifikationsspezifischen Ausfallwahrscheinlichkeiten (351) des Elementarrelais (100), wobei die Entscheider-Funktion (361) eine Abbildung der Mehrzahl von klassifikationsspezifischen Ausfallwahrscheinlichkeiten (351) auf die Ausfallwahrscheinlichkeit (370) vornimmt.

11. Verfahren (200) nach Anspruch 10, mit:
Parametrieren der Entscheider-Funktion (361) basierend auf einer Mehrzahl von Hyperparametern.

12. Verfahren (200) nach Anspruch 11,
wobei die Mehrzahl von Hyperparametern folgendes umfasst:
einen Grenzwert für die Ausfallwahrscheinlichkeit (370),
eine Anzahl von aufeinanderfolgenden Vorhersagen, welche für eine Aussage Ausfall oder kein Ausfall (371) herangezogen werden, und
einen erforderlichen Mittelwert über die Anzahl der aufeinanderfolgenden Vorhersagen für einen Ausfall (370).

13. Verfahren (200) nach Anspruch 11 oder 12, mit:
Bestimmen der Mehrzahl von Hyperparametern als Funktion der Schaltspielzahl eines ersten Datensatzes (410) von Schaltspieldurchläufen des Elementarrelais (100); und
Anpassen der Mehrzahl von Hyperparametern an einen zweiten Datensatz (420) von Schaltspieldurchläufen des Elementarrelais (100) bezüglich eines Optimierungskriteriums (403),
wobei das Optimierungskriterium (403) auf einer Anzahl unerkannter Ausfälle und einer durchschnittlichen Restlebensdauer des Elementarrelais (100) basiert.

14. Verfahren (200) nach einem der vorstehenden Ansprüche, mit:
Durchlaufen des Verfahrens (200) mit einem Trainingsdatensatz (410) von Relais- und Lastgrößen (310);
Anpassen des Maschinellen Lernalgorithmus (321) für den Trainingsdatensatz (410) basierend auf einem Optimierungskriterium bezüglich einer Anzahl unerkannter Ausfälle und einer durchschnittlichen Restlebensdauer des Elementarrelais (100); und
Validieren des Verfahrens (200) mit einem Testdatensatz (420) von Relais- und Lastgrößen (310), welcher sich von dem Trainingsdatensatz (410) unterscheidet.

15. Vorrichtung (500) zur Ausfallvorhersage eines Elementarrelais (100), umfassend:
eine Erfassungseinrichtung (501), die ausgebildet ist, messbare Relais- und Lastgrößen (310) des Elementarrelais (100) über eine Anzahl von Schaltspielen des Elementarrelais (100) zu erfassen; und
eine Bestimmungseinrichtung (502), **dadurch gekennzeichnet, dass** die Bestimmungseinrichtung ausgebildet ist, Kennwerte (330) des Elementarrelais (100) basierend auf einer Gewichtung der erfassten Relais- und Lastgrößen (310) gemäß einem Maschinellen Lernalgorithmus (503) zu bestimmen, wobei die Kennwerte (330) einen Funktionszustand des Elementarrelais (100) zum jeweiligen Schaltspiel angeben, und eine Ausfallwahrscheinlichkeit (370) des Elementarrelais (100) basierend auf den ermittelten Kennwerten (330) zu bestimmen, und die Ausfallwahrscheinlichkeit (370) des Elementarrelais (100) basierend auf einer Veränderung der Kennwerte (330) bezüglich der Anzahl von Schaltspielen zu bestimmen.

## Claims

1. Computer-implemented method (200) for failure prediction of an elementary relay (100), the method (200) comprising the following steps:
detecting (201) measurable relay and load variables (310) of the elementary relay (100) over a number of switching cycles of the elementary relay (100);
wherein the method is **characterized by** the following steps:
determining (202) characteristic values (330) of the elementary relay (100) based on a weighting of the detected relay and load variables (310) according to a machine learning algorithm (321), wherein the characteristic values (330) specify a functional state of the elementary relay (100) for the respective switching cycle;
determining (203) a failure probability (370) of the elementary relay (100) based on the determined characteristic values (330); and
determining (203) the failure probability (370) of the elementary relay (100) based on a change in the characteristic values (330) with regard to the number of switching cycles.

2. The method (200) according to claim 1,
wherein the machine learning algorithm (321) is based on a database which comprises relay and load variables (310) of elementary relays (100) for different switching cycles, the relay and load variables (310) of the elementary relays (100) being based on recordings with various loads (108) and relay types.

3. The method (200) according to claim 2,
wherein the database further comprises information about a number of failure switching cycles, a type of failure and/or a cause of the failure of the elementary relays (100) for the various loads (108) and relay types.

4. The method (200) according to claim 3, comprising:
identifying the characteristic values (330) based on the information about the number of failure switching cycles, the type of failure and/or the cause of failure of the elementary relays (100); and
determining first transfer functions (320) which generate the characteristic values (330) from the measurable relay and load variables (310).

5. The method (200) according to claim 4,
wherein the characteristic values (330) are related to the cause and/or type of failure of the elementary relays (100) and/or change before a failure and comprise in particular contact noise of the elementary relays (100), waves in the coil current of the elementary relays (100) and/or switching times of the elementary relays (100).

6. The method (200) according to one of the preceding claims, comprising:
generating generic transformations based on a dimensional reduction of the detected relay and load variables (310),
wherein the generic transformations are configured to generate characteristic values (330) of the elementary relay (100) based on new relay and load variables of the elementary relay (100), which are not included in the detected relay and load variables (310).

7. The method (200) according to claim 6, wherein the generation of generic transformations comprises the following steps:
determining a state space of the detected relay and load variables (310);
transformation of the state space into a dimensionally reduced state space; and
determining the generic transformations based on the dimensionally reduced state space.

8. The method (200) according to one of the preceding claims, comprising:
determining second transfer functions (340), which specify a plurality of classification-specific failure probabilities (351) of the elementary relay (100) from the characteristic values (330),
wherein each of the second transfer functions (340) is based on different classifications (341) of the characteristic values (330).

9. The method (200) according to claim 8, comprising:
selection of the corresponding classifications (341) for determining the second transfer functions (340) from an ensemble of predetermined classification methods (341).

10. The method (200) according to claim 8 or 9, comprising:
determining a decision maker function (361) based on the plurality of classification-specific failure probabilities (351) of the elementary relay (100), wherein the decision-maker function (361) maps the plurality of classification-specific failure probabilities (351) to the failure probability (370).

11. The method (200) according to claim 10, comprising:
parameterizing the decision maker function (361) based on a plurality of hyperparameters.

12. The method (200) according to claim 11,
wherein the plurality of hyperparameters include:
a limit value for the failure probability (370),
a number of consecutive predictions which are used for a failure or no failure (371) statement, and
a required average of the number of consecutive failures predictions (370).

13. The method (200) according to claim 11 or 12, comprising:
determining the plurality of hyperparameters as a function of the number of switching cycles of a first data record (410) of switching cycle runs of the elementary relay (100); and
adapting the plurality of hyperparameters to a second data set (420) of switching cycle runs of the elementary relay (100) with respect to an optimization criterion (403),
wherein the optimization criterion (403) is based on a number of undetected failures and an average remaining service lifetime of the elementary relay (100).

14. The method (200) according to one of the preceding claims, comprising:
running through the method (200) with a training data set (410) of relay and load variables (310);
adapting the machine learning algorithm (321) for the training data set (410) based on an optimization criterion with regard to a number of undetected failures and an average remaining service lifetime of the elementary relay (100); and
validating the method (200) with a test data set (420) of relay and load variables (310), which differs from the training data set (410).

15. A device (500) for failure prediction of an elementary relay (100), the device comprising:
a detection device (501) configured to detect measurable relay and load variables (310) of the elementary relay (100) over a number of switching cycles of the elementary relay (100); and
a determining device (502), **characterized in that** the determining device is configured to determine characteristic values (330) of the elementary relay (100) based on a weighting of the detected relay and load variables (310) according to a machine learning algorithm (503), wherein the characteristic values (330) specify a functional state of the elementary relay (100) for the respective switching cycle, and that the determining device is configured to determine a failure probability (370) of the elementary relay (100) based on the determined characteristic values (330) and to determine the failure probability (370) of the elementary relay (100) based on a change in the characteristic values (330) with regard to the number of switching cycles.

## Revendications

1. Procédé (200) mis en œuvre par ordinateur pour la prévision de défaillance d'un relais élémentaire (100), le procédé (200) comprenant les étapes suivantes :
acquisition (201) de grandeurs de relais et de charge (310) mesurables du relais élémentaire (100) sur une pluralité de cycles de commutation du relais élémentaire (100) ;
le procédé étant **caractérisé par** les étapes supplémentaires suivantes :
détermination (202) de valeurs caractéristiques (330) du relais élémentaire (100) en se basant sur une pondération des grandeurs de relais et de charge (310) acquises selon un algorithme d'apprentissage automatique (321), les valeurs caractéristiques (330) indiquant un état fonctionnel du relais élémentaire (100) au cycle de commutation respectif ;
détermination (203) d'une probabilité de défaillance (370) du relais élémentaire (100) en se basant sur les valeurs caractéristiques (330) déterminées ; et
détermination (203) de la probabilité de défaillance (370) du relais élémentaire (100) en se basant sur une modification des valeurs caractéristiques (330) par rapport au nombre de cycles de commutation.

2. Procédé (200) selon la revendication 1, l'algorithme d'apprentissage automatique (321) se basant sur une base de données qui comprend des grandeurs de relais et de charge (310) de relais élémentaires (100) pour différents cycles de commutation, les grandeurs de relais et de charge (310) du relais élémentaire (100) se basant sur des enregistrements avec des charges (108) et des types de relais différents.

3. Procédé (200) selon la revendication 2, la base de données comprenant en outre des informations à propos du nombre de cycles de commutation de défaillance, du type de défaillance et/ou de la cause de défaillance du relais élémentaire (100) avec des charges (108) et des types de relais différents.

4. Procédé (200) selon la revendication 3, comprenant :
identification des valeurs caractéristiques (330) en se basant sur les informations à propos du nombre de cycles de commutation de défaillance, du type de défaillance et/ou de la cause de défaillance du relais élémentaire (100) ; et
détermination de premières fonctions de transfert (320) qui génèrent les valeurs caractéristiques (330) à partir des grandeurs de relais et de charge (310) mesurables.

5. Procédé (200) selon la revendication 4, les valeurs caractéristiques (330) étant en liaison avec la cause de défaillance et/ou le type de défaillance du relais élémentaire (100) et/ou se modifiant avant une défaillance et comprenant notamment des bruits de contact du relais élémentaire (100), des ondes dans le courant de bobine du relais élémentaire (100) et/ou des temps de commutation du relais élémentaire (100).

6. Procédé (200) selon l'une des revendications précédentes, comprenant :
génération de transformations génériques en se basant sur une réduction de dimension des grandeurs de relais et de charge (310) acquises,
les transformations génériques étant configurées pour, en se basant sur de nouvelles grandeurs de relais et de charge du relais élémentaire (100) qui ne sont pas contenues dans les grandeurs de relais et de charge (310) acquises, générer des valeurs caractéristiques (330) du relais élémentaire (100).

7. Procédé (200) selon la revendication 6, la génération de transformations génériques comprenant les étapes suivantes :
détermination d'un espace d'état des grandeurs de relais et de charge (310) acquises ;
transformation de l'espace d'état en un espace d'état à dimension réduite ; et
détermination des transformations génériques en se basant sur l'espace d'état à dimension réduite.

8. Procédé (200) selon l'une des revendications précédentes, comprenant :
détermination de deuxièmes fonctions de transfert (340) qui, à partir des valeurs caractéristiques (330), indiquent une pluralité de probabilités de défaillance (351) du relais élémentaire (100) spécifiques à la classification,
chacune des deuxièmes fonctions de transfert (340) se basant sur des classifications (341) différentes des valeurs caractéristiques (330).

9. Procédé (200) selon la revendication 8, comprenant : sélection des classifications (341) correspondantes en vue de déterminer les deuxièmes fonctions de transfert (340) à partir d'un ensemble de procédés de classification (341) prédéfinis.

10. Procédé (200) selon la revendication 8 ou 9, comprenant :
détermination d'une fonction de décision (361) en se basant sur une pluralité de probabilités de défaillance (351) du relais élémentaire (100) spécifiques à la classification, la fonction de décision (361) effectuant une représentation de la pluralité de probabilités de défaillance (351) spécifiques à la classification sur la probabilité de défaillance (370).

11. Procédé (200) selon la revendication 10, comprenant :
paramétrage de la fonction de décision (361) en se basant sur une pluralité d'hyperparamètres.

12. Procédé (200) selon la revendication 11,
la pluralité d'hyperparamètres comprenant ce qui suit :
une valeur limite pour la probabilité de défaillance (370),
un certain nombre de prévisions successives qui sont utilisées pour une affirmation de défaillance et d'absence de défaillance (371), et
une valeur moyenne nécessaire à propos du certain nombre de prévisions successives pour une défaillance (370).

13. Procédé (200) selon la revendication 11 ou 12, comprenant :
détermination de la pluralité d'hyperparamètres en tant que fonction du nombre de cycles de commutation d'un premier jeu de données (410) d'itérations de cycle de commutation du relais élémentaire (100) ; et
adaptation de la pluralité d'hyperparamètres à un deuxième jeu de données (420) d'itérations de cycle de commutation du relais élémentaire (100) par rapport à un critère d'optimisation (403),
le critère d'optimisation (403) se basant sur un certain nombre de défaillances non reconnues et une durée de vie restante moyenne du relais élémentaire (100).

14. Procédé (200) selon l'une des revendications précédentes, comprenant :
itération du procédé (200) avec un jeu de données d'entraînement (410) de grandeurs de relais et de charge (310) ;
adaptation de l'algorithme d'apprentissage automatique (321) pour le jeu de données d'entraînement (410) en se basant sur un critère d'optimisation concernant un certain nombre de défaillances non reconnues et une durée de vie restante moyenne du relais élémentaire (100) ; et validation du procédé (200) avec un jeu de données de test (420) de grandeurs de relais et de charge (310), lequel est différent du jeu de données d'entraînement (410) .

15. Arrangement (500) pour la prévision de défaillance d'un relais élémentaire (100), comprenant :
un dispositif d'acquisition (501) qui est configuré pour acquérir des grandeurs de relais et de charge (310) mesurables du relais élémentaire (100) sur une pluralité de cycles de commutation du relais élémentaire (100) ; et
un dispositif de détermination (502),
**caractérisé en ce que** le dispositif de détermination (502) est configuré pour déterminer des valeurs caractéristiques (330) du relais élémentaire (100) en se basant sur une pondération des grandeurs de relais et de charge (310) acquises selon un algorithme d'apprentissage automatique (503), les valeurs caractéristiques (330) indiquant un état fonctionnel du relais élémentaire (100) au cycle de commutation respectif, et pour déterminer une probabilité de défaillance (370) du relais élémentaire (100) en se basant sur les valeurs caractéristiques (330) déterminées, et pour déterminer la probabilité de défaillance (370) du relais élémentaire (100) en se basant sur une modification des valeurs caractéristiques (330) par rapport au nombre de cycles de commutation.
